# EUROPÄISCHE PATENTSCHRIFT

(11) **EP 2 414 180 B1**
(45) Veröffentlichungstag und Bekanntmachung des Hinweises auf die Patenterteilung: **08.10.2014**
(21) Anmeldenummer: 10720248.3
(22) Anmeldetag: 30.03.2010
(51) Int. Cl.: B60G 7/00, F16C 11/06, F16F 1/393

(54) **ELASTOMERGELENK**
ELASTOMER ARTICULATION
ARTICULATION ELASTOMERE

(30) Priorität: 03.04.2009 DE 102009016139
(43) Veröffentlichungstag der Anmeldung: 08.02.2012
(73) Patentinhaber: TRW Automotive GmbH, 73553 Alfdorf (DE)
(72) Erfinder: ERDOGAN, Cengiz, 47608 Geldern (DE); PARTYKA, Richard, 76326 Luhacovice (CZ)
(74) Vertreter: Sties, Jochen
(86) Internationale Anmeldenummer: PCT/DE2010/000367
(87) Internationale Veröffentlichungsnummer: WO 2010/112006

(56) Entgegenhaltungen:
- EP-A1- 0 351 689
- EP-A1- 1 811 195
- DE-A1- 3 715 360
- DE-C1- 4 428 870
- JP-A- 1 158 950
- US-A- 5 477 614
- US-A1- 2005 179 182

## Beschreibung

Die Erfindung betrifft ein Elastomergelenk, insbesondere für Fahrwerksteile von Kraftfahrzeugen, nach dem Oberbegriff von Anspruch 1.

Elastomergelenke sind wartungsfrei, unempfindlich gegenüber äußeren Umwelteinflüssen und werden insbesondere im Automobilbau zur präzisen Achsführung sowie zur Erhöhung des Fahrkomforts eingesetzt. Bei solchen Elastomergelenken wird ein elastischer Elastomerkörper in axialer Richtung vorgespannt, wodurch sich eine einstellbare radiale Federkennung ergibt.

DE 37 15 360 C2 zeigt ein Elastomergelenk, bei dem ein hülsenförmiger Elastomerkörper zwischen zwei Stützringen vorgespannt ist. An der Innenumfangsfläche eines zylindrischen Gehäuses sind in einer mittleren Zone Materialausnehmungen vorgesehen, so dass ein Raum geschaffen wird, in den hinein der Elastomerkörper ausweichen kann. Hierdurch wird die Vorspannung des Elastomerkörpers in diesem Bereich reduziert, woraus sich eine mit steigender Belastung progressive Federkennung ergibt. Zur axialen Sicherung des Elastomerkörpers innerhalb des Gehäuses stützt sich einer der beiden Stützringe gegen eine innere Schulter des Gehäuses ab, wobei der andere Stützring durch einen bei der Gelenkmontage eingelegten Sprengring gehalten wird.

Der Sprengring, der zum Beispiel bei dem Elastomergelenk gemäß DE 37 15 360 C2 zum Einsatz kommt, ist auch als so genannter "Seeger-Ring" bekannt. Der Seeger-Ring zeichnet sich dadurch aus, dass er als Normteil sehr preisgünstig auf dem Markt zu beziehen ist und eine einfache Demontage des Elastomergelenks ermöglicht. Jedoch unterliegt der Seeger-Ring dem Nachteil, dass aufgrund seines rechteckigen Querschnitts bei axialen Belastungen ein Kippmoment auf ihn einwirkt, was zu einem Ausknüpfen des Seeger-Rings aus einer Nut, die in einer Innenumfangsfläche des Gehäuses ausgebildet ist, führen kann. Zumindest führt ein solches Kippmoment zu häufigen axialen Verschiebungen des Seeger-Rings, wodurch bei dem Stützring, der in Kontakt mit dem Seeger-Ring ist, Ermüdungsbrüche auftreten können. Ein weiterer Nachteil des Seeger-Rings besteht darin, dass seine Kreisüberdeckung lediglich ca. 270° beträgt, woraus ebenfalls die Gefahr eines Ausknüpfens resultieren kann.

In den Druckschriften DE 44 28 870 C1 und EP 0 351 689 A1 sind Elastomergelenke für Fahrwerksteile von Kraftfahrzeugen beschrieben, bei denen der Stützring vom Sprengring beabstandet ist und sich über einen separaten Zwischenring am Sprengring abstützt.

Hingegen zeigen die US 2005/0179182 A1 und die EP 1 811 195 A1 gattungsgemäße Elastomergelenke, bei denen eine Anlagefläche des Stützrings mit dem Sprengring in Kontakt ist, sodass sich der Stützring unmittelbar am Sprengring abstützt.

Im Falle einer axialen Gelenkbelastung wirkt bei allen Elastomergelenken der vorgenannten Druckschriften ein Kippmoment auf die Sprengringe ein. Wie bereits oben mit Bezug auf die DE 37 15 360 C2 erwähnt, kann dieses Kippmoment zu einem unerwünschten Ausknüpfen des Sprengrings aus einer Gehäusenut des Gelenkgehäuses führen.

In der JP 1-158950 A ist ein künstliches Gelenk einer Prothese offenbart, bei dem ein prothetisches Teil und ein Lagereinsatz, der einen Kugelkopf des Gelenks aufnimmt, durch einen Sprengring verbunden sind, wobei der Sprengring in eine umlaufende Nut des prothetischen Teils eingeknüpft ist.

Der Erfindung liegt die Aufgabe zugrunde, ein Elastomergelenk mit einfachen und robusten Verriegelungsmitteln zu schaffen.

Die Aufgabe wird durch ein Elastomergelenk mit den Merkmalen von Anspruch 1 gelöst. Vorteilhafte Weiterbildungen der Erfindung sind in den abhängigen Ansprüchen definiert.

Ein erfindungsgemäßes Elastomergelenk eignet sich insbesondere zur Verwendung für Fahrzeugsteilen von Kraftfahrzeugen, und umfasst ein Gehäuse mit einer Durchgangsöffnung, die axial entlang der Längsachse des Elastomergelenks verläuft. Des Weiteren umfasst das Elastomergelenk einen Gelenkzapfen, der sich durch die Durchgangsöffnung des Gehäuses erstreckt, und einen Elastomerkörper, der an dem Gelenkzapfen befestigt und radial zwischen dem Gelenkzapfen und dem Gehäuse angeordnet ist. Ein Stützring ist an einer Stirnseite der Durchgangsöffnung an dem Elastomerkörper oder an dem Gelenkzapfen angebracht, wobei ein Verriegelungselement den Stützring gegenüber dem Gehäuse arretiert, so dass der Gelenkzapfen in dem Gehäuse axial gesichert gehalten ist. Das Verriegelungselement ist aus einem Drahtring gebildet.

Die Verwendung des Drahtrings in einer Funktion als Verriegelungselement, mittels dessen der Stützring gegenüber dem Gehäuse arretiert wird, hat den Vorteil, dass in Folge des geeigneten Querschnitts eines solchen Drahtrings insbesondere bei einer axialen Belastung des Gelenkzapfens keine Kippmomente auftreten, die zu einem Ausknüpfen bzw. Lösen des Drahtrings führen. Der Drahtring kann aus einem herkömmlichen Federrundstahl hergestellt sein, was sich vorteilhaft in niedrigen Herstellungs- bzw. Beschaffungskosten niederschlägt.

In vorteilhafter Weiterbildung der Erfindung kann der Drahtring einen im Wesentlichen kreisrunden Querschnitt aufweisen. Halbzeuge mit einem solchen Querschnitt sind massenhaft verfügbar und entsprechend preiswert. Ein kreisrunder Querschnitt verhindert wie vorstehend das Entstehen eines Kippmoments und gewährleistet zudem eine ausreichende Überdeckung mit einer angrenzenden Wandung des Gehäuses. Alternativ kann der Drahtring auch einen anderen geeigneten Querschnitt aufweisen, bei dem in gleicher Weise wie beim kreisförmigen Querschnitt jedenfalls kein Kippmoment bei einer Belastung des Elastomergelenks hervorgerufen wird. Hierzu eignet sich ein mehreckiger öder ein ovaler Querschnitt. Ein mehreckiger Querschnitt des Drahtrings hat vorzugsweise die Form eines Dreiecks, wobei eine Spitze dieses Dreiecks in Richtung der angrenzenden Stirnseite der Durchgangsöffnung gerichtet ist und eine Orthogonale, die durch diese Spitze verläuft und sich auf die der Spitze gegenüberliegenden Grundseite des Dreiecks bezieht, mit der Längsachse des Elastomergelenks einen Winkel von kleiner als 90° einschließt. Gleiches gilt mutatis mutandis für den ovalen Querschnitt, dessen Längsachse in Richtung der angrenzenden Stirnseite der Durchgangsöffnung weist und mit der Längsachse des Elastomergelenks einen Winkel kleiner als 90° einschließt.

Eine Innenumfangsfläche des Gehäuses weist eine Nut auf, deren Kontur an den Querschnitt des Drahtrings angepasst ist. Dies führt dazu, dass sich der Drahtring im montierten Zustand harmonisch an die Innenumfangsfläche des Gehäuses anlegt, ohne dass es dabei zu einem Verkanten oder dergleichen kommt. Eine solche Nut lässt sich preisgünstig in der Innenumfangsfläche des Gehäuses vorgeben, zum Beispiel durch einen zerspanenden Vorgang oder unmittelbar beim Urformen des Gehäuses, zum Beispiel als Gussteil. Bei allen der vorstehend genannten möglichen Querschnittsformen für den Drahtring ergibt sich dabei der Vorteil, dass insbesondere bei axialer Belastung des Elastomergelenks der Drahtring in die Nut hineingedrückt wird, ohne dass dabei ein Kippmoment und/oder ein axiales Verschieben des Drahtrings entstehen. Somit lassen sich ein unerwünschtes Ausknüpfen oder gar Ermüdungsbrüche an dem Stützring wirkungsvoll vermeiden.

In vorteilhafter Weiterbildung der Erfindung kann der Drahtring eine Kreisüberdeckung von zumindest 300°, und insbesondere eine Kreisüberdeckung von zumindest 340° oder gar mehr aufweisen. Eine solche Kreisüberdeckung ist in jedem Fall größer als jene eines Seeger-Rings. Dies führt zu dem Vorteil, dass die Verschiebungen der freien Enden des Drahtrings bei einer axialen Belastung des Gelenkzapfens geringer sind, wodurch die Kontaktstellen des Stützrings an den freien Enden des Drahtrings geringer beansprucht werden. Im Ergebnis können somit Ermüdungsbrüche des Stützrings vermieden werden. Vergleichsversuche haben ergeben, dass bei gleichen Belastungen in axialer Richtung ein Elastomergelenk mit Drahtring keine Brucherscheinungen an dem Stützring aufwies, wohingegen eine vergleichbare Ausführungsform mit Seeger-Ring Brucherscheinungen am Stützring zeigte.

In vorteilhafter Weiterbildung der Erfindung kann der Drahtring mit einer Anlagefläche des Stützrings in Kontakt sein, wobei diese Anlagefläche mit der Längsachse des Elastomergelenks einen Winkel von im Wesentlichen 45° einschließt. Ein solcher Winkel der Kontaktfläche des Stützrings relativ zur Längsachse des Elastomergelenks hat den Vorteil, dass bei einer axialen Belastung des Gelenkzapfens bzw. des Elastomergelenks eine Kraftresultierende geeignet radial in Richtung der innerhalb der Innenumfangsfläche des Gehäuses ausgebildeten Nut aufweist. Hierdurch wird ein Ausknüpfen des Drahtrings aus der Nut wirkungsvoll verhindert, so dass eine sichere Positionierung des Gelenkzapfens innerhalb des Gehäuses in axialer Richtung gewährleistet ist.

In vorteilhafter Weiterbildung der Erfindung kann der Stützring angrenzend zur Anlagefläche eine Auswölbung aufweisen, die in Richtung der Stirnseite der Durchgangsöffnung einen Scheitelpunkt aufweist. Eine Strecke zwischen diesem Scheitelpunkt und einer Stelle, bei der die Nut in die Innenumfangsfläche des Gehäuses übergeht, ist hierbei kleiner als der Durchmesser des Drahtrings gewählt. Dies führt zu dem Vorteil, dass der Drahtring bei montiertem Elastomergelenk wegen des zu engen Durchlasses zwischen Scheitelpunkt und der Wandung der Innenumfangsfläche daran gehindert ist, in Richtung der Stirnseite der Durchgangsöffnung auszuwandern. Dies verhindert zusätzlich ein unerwünschtes Ausknüpfen des Drahtrings und erhöht somit die Betriebssicherheit.

In vorteilhafter Weiterbildung der Erfindung kann der Stützring aus einem Blechstanzteil gebildet sein. Dies wirkt sich vorteilhaft auf die Herstellungskosten aus. Ein solches Blechstanzteil kann einschließlich der vorstehend genannten abgewinkelten Anlageflächen in einem Arbeitsschritt hergestellt werden, ohne dass anschließend Nachbearbeitungen oder dergleichen erforderlich sind.

Der elastische Elastomerkörper ist im montierten Zustand stets axial vorgespannt, wodurch sich eine vorbestimmte bzw. gewünschte Federkennung des Elastomergelenks ergibt. Diese Vorspannung kann dadurch erzielt werden, dass der Elastomerkörper zwischen den Stützringen eingespannt wird. Hierbei können die Stützringe direkt an dem Gelenkzapfen befestigt sein, wobei sie den Elastomerkörper beiderseits an seinen axialen Stirnseiten nach Art eines Deckels umfassen. Bei einer solchen Ausführungsform ist eine Torsionsbewegung des Elastomerkörpers bezüglich des Gehäuses gewährleistet. Alternativ können die Stützringe direkt an den Elastomerkörper befestigt sein, z.B. durch Anvulkanisieren. Hierbei sind die Stützringe radial an einer Außenumfangsfläche des Elastomerkörpers befestigt bzw. anvulkanisiert. Dies ermöglicht sowohl eine Torsionsbewegung des Elastomerkörpers bezüglich des Gehäuses als auch eine kardanische Kippbewegung in einem bestimmten Winkelbereich relativ zur Längsachse des Elastomergelenks, zum Beispiel in einem Winkelbereich von 15°.

In vorteilhafter Weiterbildung der Erfindung kann das Gehäuse eine von außen zugängliche Bohrung aufweisen, die angrenzend an den Drahtring mündet. Durch diese Bohrung kann ein Hilfswerkzeug eingeführt werden, z. B. ein Dorn oder dergleichen, dessen Spitze dann in Kontakt mit zumindest einem freien Ende des Drahtrings gelangt. Mittels dieses Hilfswerkzeugs ist ein gezieltes Ausknüpfen des Drahtrings aus der Nut möglich, um das Elastomergelenk bei Bedarf zu demontieren.

In vorteilhafter Weiterbildung der Erfindung kann an beiden Stirnseiten der Durchgangsöffnung ein Stützring vorgesehen sein, der jeweils durch ein Verriegelungselement in Form des Drahtrings gegenüber dem Gehäuse arretiert ist. Dies führt zu dem Vorteil, dass eine Innenumfangsfläche des Gehäuses symmetrisch ausgebildet sein kann, was zu Kostenvorteilen führt. Anders ausgedrückt, ist bei einer solchen Ausführungsform der Gelenkzapfen beiderseits im Bereich der jeweiligen Stirnseite der Durchgangsöffnung mittels eines Drahtrings an dem Gehäuse fixiert. Somit ist es nicht erforderlich, innerhalb des Gehäuses einen Schulterabschnitt oder dergleichen vorzusehen, an dem ansonsten ein Stützring zur axialen Fixierung anliegen würde.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist nachfolgend anhand einer Ausführungsform in der Zeichnung schematisch dargestellt und wird unter Bezugnahme auf die Zeichnung ausführlich beschrieben.

Es zeigen:
- Figur 1: ein erfindungsgemäßes Elastomergelenk in einer seitlichen Querschnittsansicht,
- Figur 2: eine vergrößerte Ansicht des Bereichs I von Figur 1,
- Figur 3: eine vergrößerte Ansicht des Bereichs I von Figur 1, in einer modifizierten Ausführungsform,
- Figur 4: einen Teilbereich des Elastomergelenks gemäß Figur 1, bezüglich dessen ein axialer Belastungsfall dargestellt ist,
- Figur 5: eine Vergrößerung des Bereichs A von Figur 4,
- Figur 6: eine Draufsicht auf einen Drahtring des erfindungsgemäßen Elastomergelenks,
- Figur 7: eine Seitenansicht des Drahtrings von Figur 6,
- Figur 8: eine weitere Ausführungsform des erfindungsgemäßen Elastomergelenks in einer seitlichen Querschnittsansicht,
- Figuren 9a, 9b: jeweils Seitenansichten eines Teils des Elastomergelenks Gemäß Fig. 1 bzw. Fig. 8, wobei alternative Querschnittsformen für einen Drahtring dargestellt sind,
- Figur 10: ein erfindungsgemäßes Elastomergelenk in einer seitlichen Querschnittsansicht gemäß einer weiteren Ausführungsform,
- Figur 11: ein herkömmliches Elastomergelenk in einer seitlichen Querschnittsansicht,
- Figur 12: eine Draufsicht auf ein Verriegelungselement in Form eines herkömmlichen Seeger-Rings,
- Figur 13: eine Seitenansicht des Seeger-Rings gemäß Figur 12,
- Figur 14: eine vergrößerte Ansicht des Bereichs II von Figur 11 in einem axialen Belastungsfall, und
- Figur 15: eine vergrößerte Ansicht des Bereichs III von Figur 11 bei Einwirkung einer axialen Belastung.

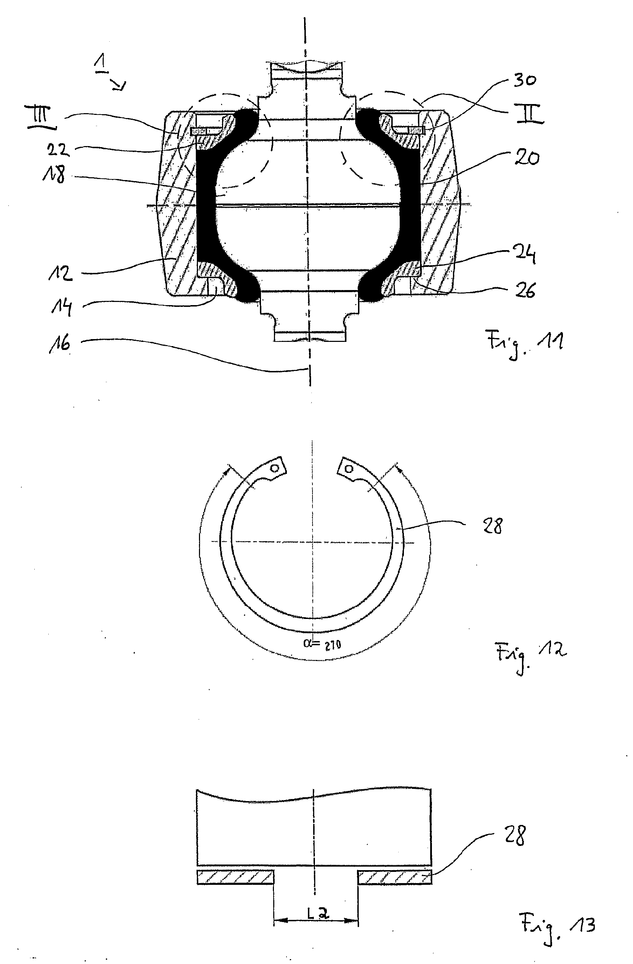

Figur 11 zeigt ein herkömmliches Elastomergelenk 1 in einer seitlichen Querschnittsansicht. Das Elastomergelenk 1 weist ein Gehäuse 12 mit einer Durchgangsöffnung 14 auf, die sich axial einer Längsachse 16 des Elastomergelenks 10 erstreckt. Ein Gelenkzapfen 18 erstreckt sich durch die Durchgangsöffnung 14 bzw. ist in dieser aufgenommen. An einer Außenumfangsfläche des Gelenkzapfens 18 ist ein Elastomerkörper 20 befestigt, der mit seiner Außenumfangsfläche im mittigen Bereich des Elastomergelenks 1 an einer Innenumfangsfläche des Gehäuses 12 anliegt. Der Elastomerkörper 20 kann an dem Gelenkzapfen 18 bzw. an der Innenumfangsfläche des Gehäuses 12 durch Anvulkanisieren, Verkleben oder dergleichen befestigt sein. Mittels des Elastomerkörpers 20 ist eine Bewegung des Gelenkzapfens 18 relativ zum Gehäuse 12 rotatorisch um die Längsachse 16 und/oder kardanisch, d.h. im Wege einer Kippbewegung um die Längsachse 16, möglich.

An dem Elastomerkörper 20 sind im Bereich der beiden Stirnseiten der Durchgangsöffnung 14 ein oberer Stützring 22 und ein unterer Stützring 24 befestigt, zum Beispiel durch Anvulkanisieren, Verkleben oder dergleichen. Mittels der Stützringe 22, 24 ist der Elastomerkörper 20 axial, d.h. in Richtung der Längsachse 16, vorgespannt. Der untere Stützring 24 sitzt auf einem Schulterabschnitt 26 an der Innenumfangsfläche des Gehäuses 12 auf, so dass er axial positioniert ist. Der obere Stützring 22 ist durch ein Verriegelungselement 28 in Form eines Sprengrings (auch als "Seeger-Ring" bekannt) gesichert, der in Figur 12 in einer Draufsicht und in Figur 13 in einer Seitenansicht einzeln dargestellt ist. Der Seeger-Ring 28 greift im montierten Zustand in eine Nut 30 ein, die in der Innenumfangsfläche des Gehäuses 12 ausgebildet ist. Bei montiertem Seeger-Ring 28 ist somit auch der obere Stützring 22 axial innerhalb des Gehäuses 12 positioniert. Im montierten Zustand gemäß der Darstellung von Figur 11 ist somit der Gelenkzapfen 18 gegen ein Herausfallen aus dem Gehäuse 12 gesichert.

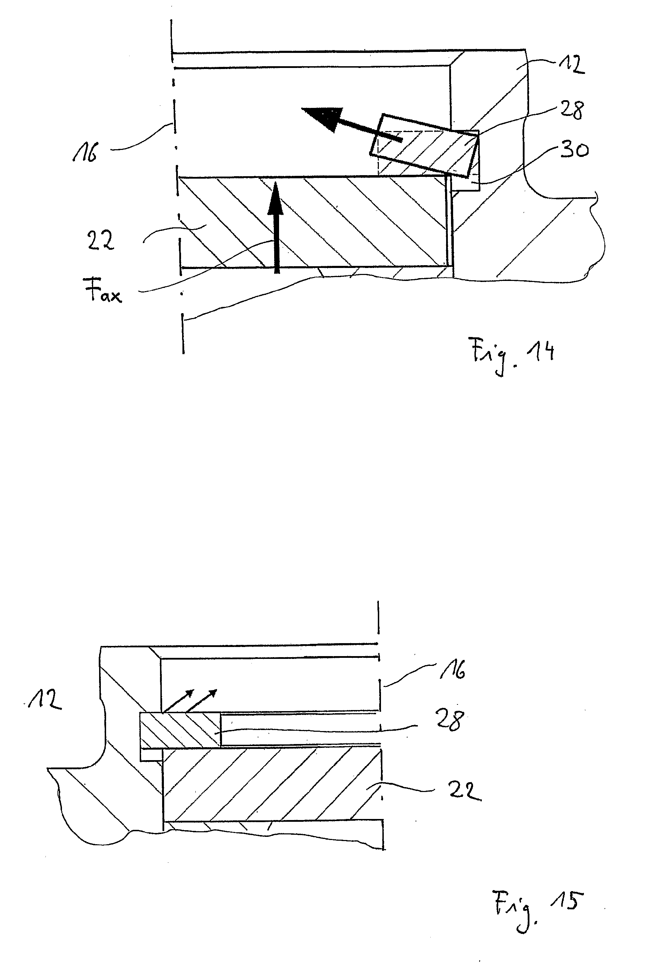

Die axiale Fixierung des oberen Stützrings 22 innerhalb des Gehäuses 12 mittels des Seeger-Rings 28 ist insofern nachteilig, als dass der Seeger-Ring 28 ab einer bestimmten Belastungshöhe des Elastomergelenks 1 aus der Nut 30 ausknüpfen kann. Figur 15 zeigt den Bereich III von Figur 11, wenn eine axiale Belastung auf den Gelenkzapfen 18 und damit auch auf den Seeger-Ring 28 einwirkt. In Figur 15 stellen Pfeile die Kraftrichtung bzw. die resultierenden Kräfte dar, die bei axialer Belastung auf den Seeger-Ring 28 einwirkt. Figur 14 zeigt den Bereich II von Figur 11, und entspricht spiegelbildlich der Darstellung von Figur 15. In Figur 14 ist der Vorgang des Ausknüpfens des Seeger-Rings 28 aus der Nut 30 dargestellt, in Folge einer axial wirkenden Kraft Fₐₓ. Wegen des rechteckigen Querschnitts des Seeger-Rings 28 führt die axiale Kraft Fₐₓ dazu, dass ein Kippmoment auf den Seeger-Ring 28 einwirkt, welches letztlich das Ausknüpfen des Seeger-Rings 28 zur Folge hat.

Eine Schädigung des Elastomergelenks 1 kann einerseits dadurch auftreten, dass der Seeger-Ring 28, wie in Figur 14 gezeigt, aus der Nut 30 ausknüpft, so dass der obere Stützring 22 nicht länger innerhalb des Gehäuses 12 gesichert ist. Eine weitere Möglichkeit der Schädigung bei dem Elastomergelenk 10 gemäß Figur 11 besteht darin, dass in dem oberen Stützring 22 in den Bereichen, die in Kontaktanlage mit den beiden freien Enden des Seeger-Rings 28 sind, Ermüdungsbrüche auftreten. Solche Ermüdungsbrüche resultieren daraus, dass eine axiale Belastung des Gelenkzapfens 18 zu kleinen axialen Verschiebungen des Seeger-Rings 28 führt, insbesondere im Bereich seiner beiden freien Enden. Solche Verschiebungen werden dadurch unterstützt, dass der Seeger-Ring 28, wie in Figur 12 gezeigt, eine Kreisüberdeckung von ungefähr 270° aufweist, so dass die freien Enden relativ weit voneinander beabstandet sind. Dieser Abstand ist in Figur 13 durch die Strecke L2 kenntlich gemacht. Insgesamt unterliegt somit die axiale Sicherung des oberen Stützrings 22 mittels des Seeger-Rings 28 wegen der genannten Schadensmöglichkeiten einer geringen Betriebssicherheit.

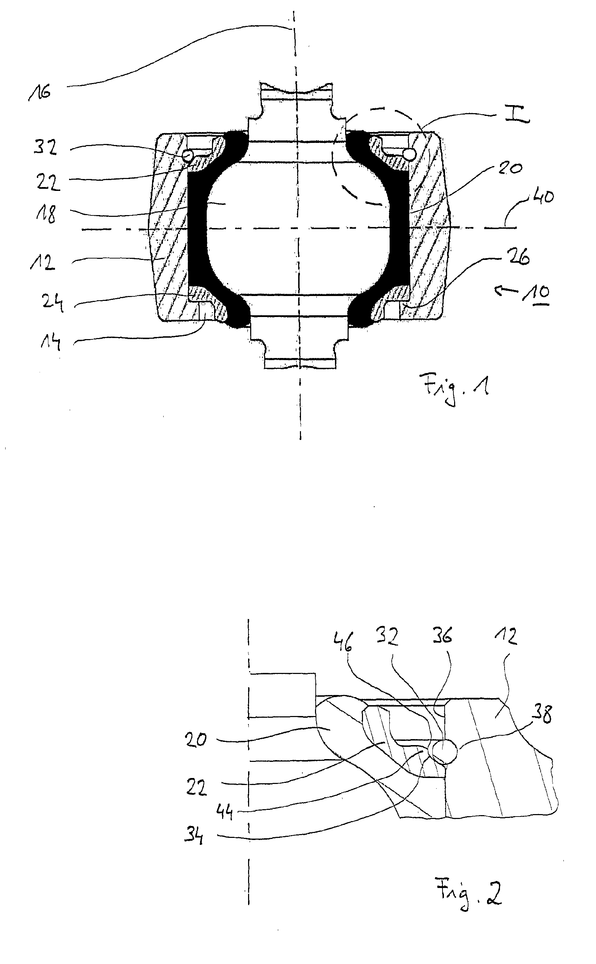

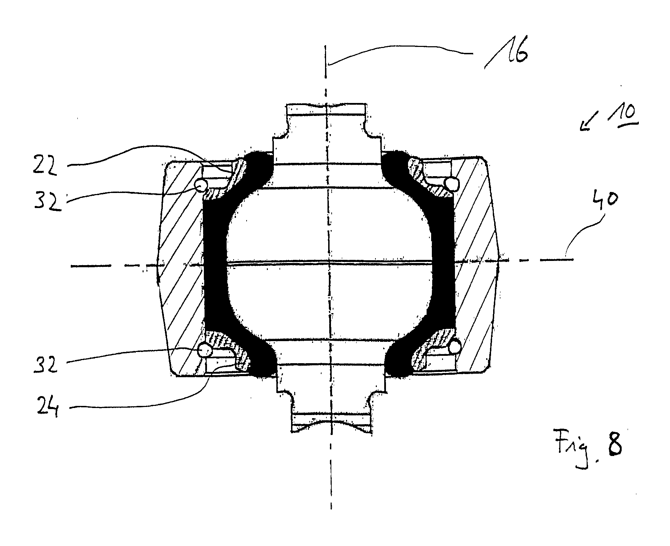

In Figur 1 ist ein erfindungsgemäßes Elastomergelenk 10 in einer seitlichen Querschnittsansicht gezeigt. Dieses Gelenk entspricht in seinem wesentlichen Aufbau dem Gelenk von Figur 8 - wesentliche Bauelemente sind mit gleichen Bezugszeichen versehen und zur Vermeidung von Wiederholungen nicht nochmals erläutert.

Ein wesentlicher Unterschied des Elastomergelenks 10 gemäß Figur 1 gegenüber dem herkömmlichen Elastomergelenk 1 gemäß Figur 11 besteht in der Sicherung zumindest einer der beiden Stützringe. Anstelle eines Seeger-Rings 28 wird bei dem Elastomergelenk von Figur 1 der obere Stützring 22 mittels eines Drahtrings 32 axial gesichert in dem Gehäuse 12 gehalten. Der Drahtring 32 kann aus einem herkömmlichen Federrundstahl oder dergleichen hergestellt sein. Entsprechend ist die Herstellung dieses Drahtrings bzw. dessen Beschaffung sehr kostengünstig.

Figur 2 zeigt den Bereich I von Figur 1 in einer vergrößerten Ansicht. Der obere Stützring 22 weist angrenzend zu seiner Außenumfangsfläche eine Anlagefläche 34 auf, die mit dem Drahtring 32 in Kontakt ist. An einer Innenumfangsfläche 36 des Gehäuses 12 ist eine Nut 38 ausgebildet, deren Kontur an den im Wesentlichen kreisförmigen Querschnitt des Drahtrings angepasst ist. Im montierten Zustand schmiegt sich somit der Drahtring 32 harmonisch in die Nut 38 ein , ohne dass es dabei zu einem Verkanten oder dergleichen kommt.

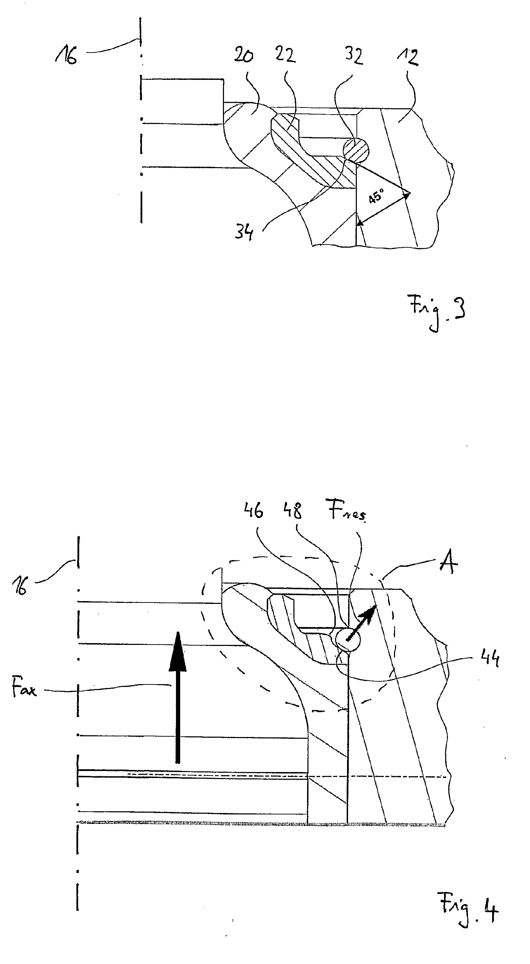

In den Figuren 3 und 4 ist der Bereich I von Figur 1 jeweils in einer vergrößerten Darstellung gezeigt. Figur 3 verdeutlicht, dass die Anlagefläche 34 mit der Längsachse 16 (bzw. mit einer Parallelen zur Längsachse 16) einen Winkel von 45° einschließt. Anders ausgedrückt, ist eine Oberfläche der Anlagefläche 34 gegenüber der Längsachse 16 um einen Winkel von 45° geneigt. Figur 4 verdeutlicht die vorteilhafte Wirkung dieser Winkelbeziehung. Bei Auftreten einer axialen Kraft Fₐₓ, die auf den Gelenkzapfen 18 und somit auch auf den oberen Stützring 22 wirkt, erfährt der Drahtring 32 eine resultierende Kraft Fᵣₑₛ, die in Richtung der Nut 38 gerichtet ist. Entsprechend wird der Drahtring 32 durch die Kraft Fᵣₑₛ in die Nut 38 hineingedrückt, so dass ein selbsttätiges Ausknüpfen des Drahtrings 32 aus der Nut 38 bei einer axialen Belastung des Elastomergelenks 10 nicht möglich ist. Hierdurch ist die Betriebssicherheit des Elastomergelenks 10 wesentlich verbessert.

Es versteht sich, dass der vorstehend genannte Winkel von 45° zwischen der Anlagefläche 34 und der Längsachse 16 auch andere Werte annehmen kann, zum Beispiel größer oder kleiner 45°. Für diesen Winkel ist lediglich von Bedeutung, dass er geeignet so gewählt ist, dass bei einer auf den Drahtring 32 einwirkenden Belastung (in radialer und/oder in axialer Richtung) die Kraftresultierende Fᵣₑₛ steht in Richtung der Nut 38 zeigt, so dass ein Ausknüpfen des Drahtrings 32 verhindert ist.

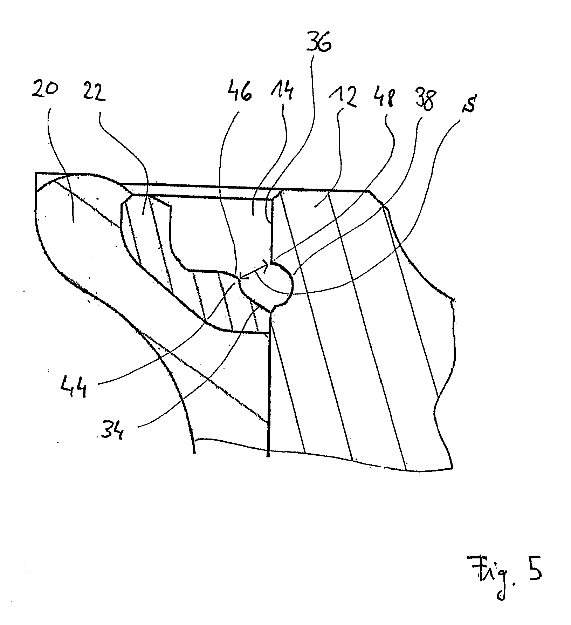

Figur 5 zeigt den Bereich A von Figur 4 in einer vergrößerten Darstellung. Zur Vereinfachung ist hierbei der Drahtring 32 nicht gezeigt. Der obere Stützring 22 weist angrenzend zur Anlagefläche 34 eine Auswölbung 44 auf, die in Richtung der angrenzenden Stirnseite der Durchgangsöffnung 14 einen Scheitelpunkt 46 hat. Der Abstand zwischen diesem Scheitelpunkt 46 und einer Stelle 48, an der die Nut 38 in die Innenumfangsfläche 36 des Gehäuses 12 übergeht, bestimmt sich als Strecke s. Von Bedeutung ist, dass die Strecke s kleiner als der Durchmesser des Drahtrings 32 gewählt ist. In montiertem Zustand ist dies auch in den Darstellungen von Figur 2 und Figur 4 gezeigt. Indem die Strecke s kleiner als der Durchmesser des Drahtrings 32 gewählt ist, kann der Drahtring bereits aus geometrischen Zwängen nicht aus der Nut 38 ausknüpfen.

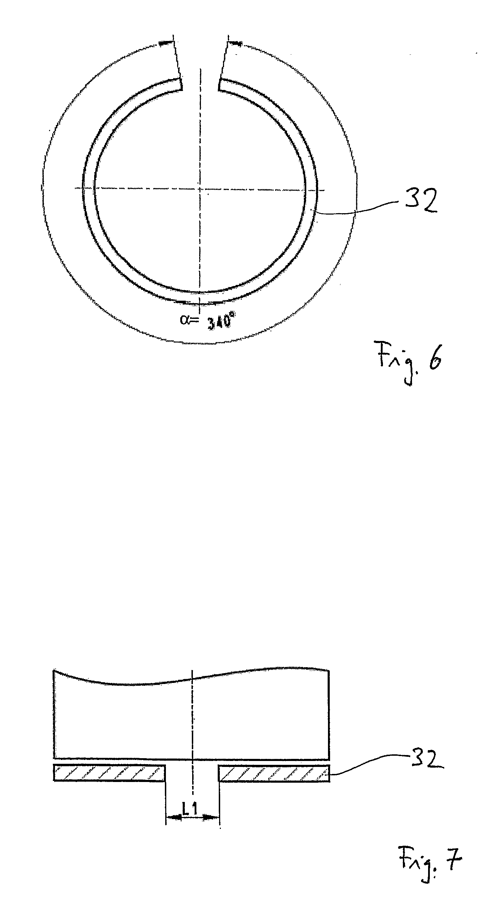

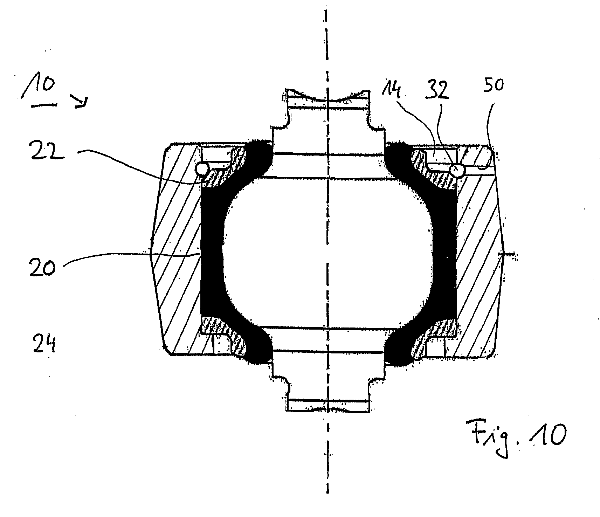

Der Drahtring 32 ist in Figur 6 in einer Draufsicht gezeigt. Figur 7 zeigt diesen Drahtring 32 in einer Seitenansicht. Der Drahtring 32 weist eine Kreisüberdeckung von etwa 340° auf, und entsprechend ist der Abstand zwischen den beiden freien Enden des Drahtrings 32 (in Figur 6 durch die Strecke L1 dargestellt) kleiner als der Abstand der beiden freien Enden des Seeger-Rings 28 (gemäß der Strecke L2 von Figur 10). Der geringere Abstand der beiden freien Enden des Drahtrings 32 zueinander bzw. seine größere Kreisüberdeckung als im Vergleich zum Seeger-Ring führt zusätzlich zu einer größeren Betriebssicherheit, da die beiden freien Enden des Drahtrings 32 geringeren axialen Verschiebungen bei Auftreten von axialen Belastungen unterliegen. Des Weiteren können wegen des runden Querschnitts des Drahtrings 32 keine Ausknüpf- bzw. Kippmomente im Bereich der Nut 38 auftreten, wodurch die axiale Sicherung des oberen Stützrings 22 innerhalb des Gehäuses 12 weiter verbessert ist.

Ähnlich wie bei der Ausführungsform von Figur 11 sitzt bei der Ausführungsform von Figur 1 der untere Stützring 24 auf einem Schulterabschnitt 26 auf, der an einer Innenumfangsfläche des Gehäuses 12 ausgebildet ist. Hierdurch ist der untere Stützring 24 axial bezüglich des Gehäuses 12 festgelegt. In Abweichung von der in Figur 1 gezeigten Ausführungsform kann jedoch auch ein unterer Stützring verwendet werden, der baugleich mit dem oberen Stützring 22 ist. In Entsprechung zu der Anlagefläche 34 eines solchen Stützrings wäre dann im unteren Bereich des Gehäuses 12 anstelle des Schulterabschnitts 26 eine geeignete Fase oder dergleichen vorgesehen, an der sich diese Anlagefläche 34 anlegt. Die Verwendung von baugleichen Stützringen bringt neben Kosteneinsparungen den wesentlichen Vorteil mit sich, dass sich dadurch eine Montage des Elastomergelenks 10 vereinfacht, weil eine Verwechslung von verschiedenen Stützringen ausgeschlossen ist.

Figur 8 zeigt eine weitere Ausführungsform des Elastomergelenks 10. Im Unterschied zur Ausführungsform von Figur 1 sind bei der Ausführungsform von Figur 8 sowohl der obere Stützring 22 als auch der untere Stützring 24 beide durch einen Drahtring 32 axial gesichert. Die Ausgestaltung der Stützringe und der komplementären Nuten bei der Ausführungsform von Figur 8 entspricht der Darstellung gemäß Figur 2, so dass zur Vermeidung von Wiederholungen darauf Bezug genommen wird. Die Ausführungsform von Figur 8 hat den Vorteil, dass eine Innenumfangsfläche des Gehäuses 12 vollständig symmetrisch zur Querachse 40 des Elastomergelenks 10 ausgebildet ist, da der Schulterabschnitt 26 (vgl. Figur 1) weggelassen ist. Bei der Ausführungsform von Figur 8 können der obere und der untere Stützring 22, 24 aus gleichen Teilen bestehen, was sich günstig auf die Herstellungskosten auswirkt.

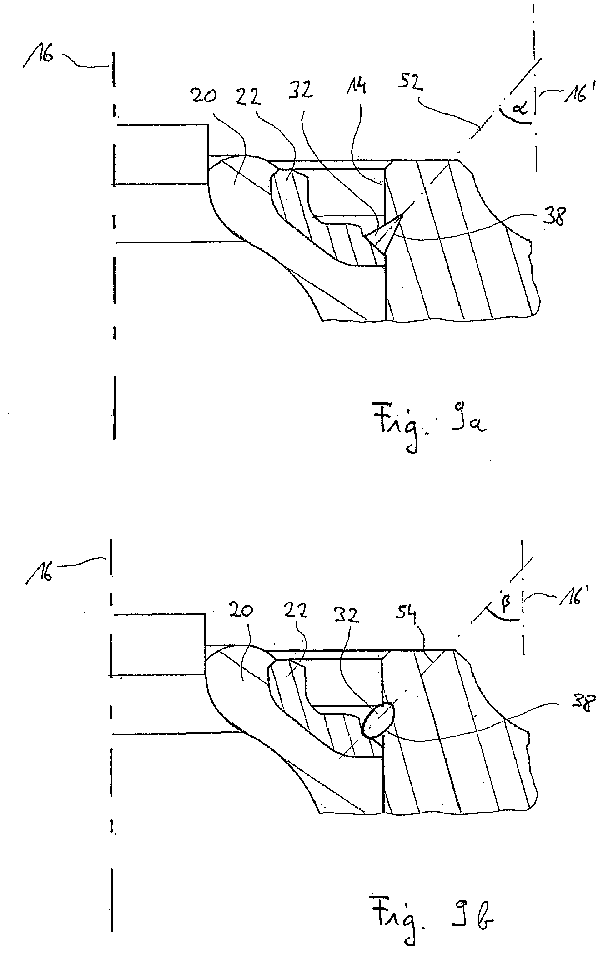

In den Figuren 9a und 9b sind vergrößerte Teilbereiche des Elastomergelenks 10 bezüglich des Bereichs I von Figur 1 gezeigt, wobei hierin der Drahtring 32 einen alternativen Querschnitt aufweist, nämlich in Form eines Dreiecks (Figur 9a) bzw. in Form eines Ovals (Figur 9b). Bei der dreieckigen Querschnittsform weist die Spitze des Dreiecks in Richtung der angrenzenden Stirnseite der Durchgangsöffnung 14, wobei eine Orthogonale 52, die durch die Spitze des Dreiecks verläuft und sich auf eine der Spitze gegenüberliegende Grundseite bezieht, mit der Längsachse 16 (bzw. einer Parallelen 16' dazu) einen Winkel α einschließt. Gleiches gilt für den Drahtring 32 mit ovalem Querschnitt (Figur 9b), wobei eine Längsachse 54 dieses Ovals mit der Längsachse 16 des Elastomergelenks 10 (bzw. einer Parallelen 16' dazu) einen Winkel β einschließt. Die Winkel α bzw. β sind jeweils kleiner als 90°.

Es versteht sich, dass bei den Ausführungsformen des Drahtrings 32 gemäß der Figuren 9a bzw. 9b die Nut 38, die an der Innenumfangsfläche 36 des Gehäuses 12 ausgebildet ist, komplementär zum Querschnitt des Drahtrings 32 ausgebildet ist. Entsprechend resultieren hieraus die gleichen Vorteile wie bei der kreisrunden Querschnittsform des Drahtrings gemäß Figur 4, wonach eine Kraftresultierende bei Beanspruchungen des Drahtrings 32 stets in Richtung der Nut 38 zeigt und deshalb ein Ausknüpfen des Drahtsrings 32 wirkungsvoll verhindert ist.

Figur 10 zeigt eine weitere Modifikation des Elastomergelenks 10. Einziger Unterschied gegenüber der Ausführungsform gemäß Figur 1 besteht darin, dass in dem Gehäuse 12 eine seitliche Bohrung 50 vorgesehen ist, die von außen zugänglich ist. Die Bohrung 50 führt radial nach innen und mündet angrenzend an den Drahtring 32. Mittels der Bohrung 50 kann bei Bedarf eine Demontage des Elastomergelenks 10 vorgenommen werden. Dies erfolgt in der Weise, dass zunächst der obere Stützring 22 zwangsweise axial nach innen, d.h. in Richtung des unteren Stützrings 24 verschoben wird, gegen die Vorspannung des Elastomerkörpers 20. Hierdurch wird der Drahtring 32 im Bereich der Durchgangsöffnung 14 von dem oberen Stützring 22 freigegeben. Anschließend kann ein Hilfswerkzeug, zum Beispiel in Form eines Dorns, durch die Bohrung 50 von außen eingeführt werden, wobei sich dann der Drahtring 32 mit der Spitze dieses Doms aus der Nut 38 aushebeln lässt. Vorzugsweise gelangt die Spitze des Doms in Kontakt mit dem Drahtring 32 im Bereich eines seiner freien Enden.

Das erfindungsgemäße Elastomergelenk 10 weist gegenüber einem herkömmlichen Elastomergelenk eine verbesserte Leistungsfähigkeit dahingehend auf, dass auch bei größeren axialen bzw. radialen Belastungen keine Schädigungen des Gelenks (zum Beispiel in Form eines Ausknüpfens des Drahtrings oder von Brucherscheinungen am Stützring) auftreten. Zusätzlich ist die Bereitstellung des Drahtrings 32 mit äußerst preisgünstigen Mitteln möglich, wobei der an sich bekannte Aufbau eines Elastomergelenks zur Verwendung eines solchen Drahtrings nur geringe Modifikationen erfordert.

## Patentansprüche

1. Elastomergelenk (10), insbesondere für Fahrwerksteile von Kraftfahrzeugen, umfassend
ein Gehäuse (12) mit einer Durchgangsöffnung (14), die axial entlang der Längsachse (16) des Elastomergelenks (10) verläuft,
einen Gelenkzapfen (18), der sich durch die Durchgangsöffnung (14) des Gehäuses (12) erstreckt,
einen Elastomerkörper (20), der an dem Gelenkzapfen (18) befestigt und radial zwischen dem Gelenkzapfen (18) und dem Gehäuse (12) angeordnet ist, und
zumindest einen Stützring (22), der an einer Stirnseite der Durchgangsöffnung (14) an dem Elastomerkörper (20) oder an dem Gelenkzapfen (18) angebracht ist,
wobei ein Verriegelungselement mit einer Anlagefläche (34) des Stützrings (22) in Kontakt ist und den Stützring gegenüber dem Gehäuse (12) arretiert, so dass der Gelenkzapfen (18) in dem Gehäuse (12) axial gesichert gehalten ist, und
wobei eine Innenumfangsfläche (36) des Gehäuses (12) eine Nut (38) aufweist, deren Kontur an den Querschnitt des Verriegelungselements angepasst ist,
wobei das Verriegelungselement aus einem Drahtring (32) gebildet ist,
**dadurch gekennzeichnet, dass** die Anlagefläche (34) des Stützrings (22) mit der Längsachse (16) des Elastomergelenks (10) einen Winkel einschließt, der so gewählt ist, dass der Drahtring (32) bei Auftreten einer auf den Gelenkzapfen (18) wirkenden, axialen Kraft (Fₐₓ) eine resultierende Kraft (Fᵣₑₛ) erfährt, welche stets in die Nut (38) zeigt, sodass ein Ausknüpfen des Drahtrings (32) verhindert ist.

2. Elastomergelenk (10) nach Anspruch 1, bei dem der Drahtring (32) einen im Wesentlichen kreisförmigen Querschnitt aufweist.

3. Elastomergelenk (10) nach Anspruch 1, bei dem der Drahtring (32) einen im Wesentlichen ovalen Querschnitt aufweist, wobei die Längsachse (54) des Ovals in Richtung der angrenzenden Stirnseite der Durchgangsöffnung weist und mit der Längsachse (16, 16') des Elastomergelenks (10) einen Winkel (β) kleiner als 90° einschließt.

4. Elastomergelenk (10) nach Anspruch 1, bei dem der Drahtring (32) einen mehreckigen Querschnitt aufweist.

5. Elastomergelenk (10) nach Anspruch 4, bei dem der Drahtring (32) einen dreieckigen Querschnitt aufweist, wobei eine Spitze des dreieckigen Querschnitts in Richtung der angrenzenden Stirnseite der Durchgangsöffnung gerichtet ist und eine Orthogonale (52), die durch diese Spitze verläuft und sich auf die der Spitze gegenüberliegenden Grundseite des dreieckigen Querschnitts bezieht, mit der Längsachse des Elastomergelenks (10) einen Winkel (α) kleiner als 90° einschließt.

6. Elastomergelenk (10) nach einem der Ansprüche 1 bis 5, bei dem die Anlagefläche (34) des Stützrings (22) mit der Längsachse (16) des Elastomergelenks (10) einen Winkel von im Wesentlichen 45° einschließt.

7. Elastomergelenk (10) nach einem der Ansprüche 1 bis 6, bei dem der obere Stützring (22) angrenzend zur Anlagefläche (34) eine Auswölbung (44) mit einem Scheitelpunkt (46) aufweist, wobei eine Strecke (s) zwischen dem Scheitelpunkt (46) und einer Stelle (48), an der die Nut (38) in die Innenumfangsfläche (36) des Gehäuses (12) übergeht, kleiner als der Durchmesser des Drahtrings (32) ist.

8. Elastomergelenk (10) nach einem der Ansprüche 1 bis 7, bei dem der Drahtring (32) eine Kreisüberdeckung von zumindest 300° aufweist.

9. Elastomergelenk (10) nach Anspruch 8, bei dem der Drahtring (32) eine Kreisüberdeckung von zumindest 340° aufweist.

10. Elastomergelenk (10) nach einem der Ansprüche 1 bis 9, bei dem der Stützring (22, 24) aus einem Blechstanzteil gebildet ist.

11. Elastomergelenk (10) nach einem der Ansprüche 1 bis 10, bei dem der Stützring (22, 24) an dem Elastomerkörper (20) befestigt ist.

12. Elastomergelenk (10) nach Anspruch 11, bei dem der Stützring (22, 24) an dem Elastomerkörper (20) anvulkanisiert ist.

13. Elastomergelenk (10) nach einem der Ansprüche 1 bis 12, bei dem das Gehäuse (12) eine von außen zugängliche Bohrung (50) aufweist, die angrenzend an den Drahtring (32) mündet.

14. Elastomergelenk (10) nach einem der Ansprüche 1 bis 13, bei dem an beiden Stirnseiten der Durchgangsöffnung ein Stützring (22, 24) vorgesehen ist, der jeweils durch ein Verriegelungselement in Form des Drahtrings (32) gegenüber dem Gehäuse (12) arretiert ist.

## Claims

1. An elastomeric joint (10), in particular for chassis components of motor vehicles, comprising
a housing (12) having a through-opening (14) which extends axially along the longitudinal axis (16) of the elastomeric joint (10),
a pivot pin (18) which extends through the through-opening (14) of the housing (12),
an elastomeric body (20) which is fastened to the pivot pin (18) and is arranged radially between the pivot pin (18) and the housing (12), and
at least one supporting ring (22) which is mounted to the elastomeric body (20) or to the pivot pin (18) on an end face of the through-opening (14),
a locking element being in contact with a contact surface (34) of the supporting ring (22) and locking the supporting ring with respect to the housing (12) so that the pivot pin (18) is held so as to be axially secured in the housing (12), and
an inner circumferential surface (36) of the housing (12) including a groove (38) having a contour that is adapted to the cross-section of the locking element,
the locking element being formed from a wire ring (32),
**characterized in that** the contact surface (34) of the supporting ring (22) includes an angle with the longitudinal axis (16) of the elastomeric joint (10) that is selected such that in the event of an axial force (Fₐₓ) acting on the pivot pin (18), the wire ring (32) experiences a resulting force (Fᵣₑₛ) that always points into the groove (38) so that the wire ring (32) is prevented from coming loose.

2. The elastomeric joint (10) according to claim 1, in which the wire ring (32) has a substantially circular cross-section.

3. The elastomeric joint (10) according to claim 1, in which the wire ring (32) has a substantially oval cross-section, the longitudinal axis (54) of the oval pointing towards the adjoining end face of the through-opening and including an angle (β) with the longitudinal axis (16, 16') of the elastomeric joint (10) which is smaller than 90°.

4. The elastomeric joint (10) according to claim 1, in which the wire ring (32) has a polygonal cross-section.

5. The elastomeric joint (10) according to claim 4, in which the wire ring (32) has a triangular cross-section, a tip of the triangular cross-section being directed towards the adjoining end face of the through-opening, and an orthogonal line (52) which extends through said tip and relates to the base side of the triangular cross-section opposite the tip including an angle (α) with the longitudinal axis of the elastomeric joint (10) which is smaller than 90°.

6. The elastomeric joint (10) according to any of claims 1 to 5, in which the contact surface (34) of the supporting ring (22) includes an angle of substantially 45° with the longitudinal axis (16) of the elastomeric joint (10).

7. The elastomeric joint (10) according to any of claims 1 to 6, in which the upper supporting ring (22) includes a bulge (44) with an apex (46) adjacent to the contact surface (34), a distance (s) between the apex (46) and a point (48) where the groove (38) continues into the inner circumferential surface (36) of the housing (12) being smaller than the diameter of the wire ring (32).

8. The elastomeric joint (10) according to any of claims 1 to 7, in which the wire ring (32) has a circular arc extension of at least 300°.

9. The elastomeric joint (10) according to claim 8, in which the wire ring (32) has a circular arc extension of at least 340°.

10. The elastomeric joint (10) according to any of claims 1 to 9, in which the supporting ring (22, 24) is formed from a stamped sheet metal part.

11. The elastomeric joint (10) according to any of claims 1 to 10, in which the supporting ring (22, 24) is fastened to the elastomeric body (20).

12. The elastomeric joint (10) according to claim 11, in which the supporting ring (22, 24) is vulcanized to the elastomeric body (20).

13. The elastomeric joint (10) according to any of claims 1 to 12, in which the housing (12) includes a bore hole (50) which is accessible from outside and opens at a place adjoining the wire ring (32).

14. The elastomeric joint (10) according to any of claims 1 to 13, in which both end faces of the through-opening have a supporting ring (22, 24) provided thereon, each of which is locked with respect to the housing (12) by means of a locking element in the form of the wire ring (32).

## Revendications

1. Articulation élastomère (10), en particulier pour des pièces de châssis de véhicules automobiles, comprenant
un boîtier (12) présentant un orifice de passage (14) qui s'étend axialement le long de l'axe longitudinal (16) de l'articulation élastomère (10),
un tourillon d'articulation (18) qui s'étend à travers l'orifice de passage (14) du boîtier (12),
un corps élastomère (20) qui est fixé sur le tourillon d'articulation (18) et qui est agencé radialement entre le tourillon d'articulation (18) et le boîtier (12), et
au moins un anneau support (22) qui est monté sur une face frontale de l'orifice de passage (14) sur le corps élastomère (20) ou sur le tourillon d'articulation (18),
un élément de verrouillage étant en contact avec une surface d'appui (34) de l'anneau support (22) et arrêtant l'anneau support par rapport au boîtier (12) de telle sorte que le tourillon d'articulation (18) est retenu dans le boîtier (12) de manière à être axialement bloqué, et
une surface périphérique intérieure (36) du boîtier (12) présentant une rainure (38) dont le contour est adapté à la section transversale de l'élément de verrouillage,
l'élément de verrouillage étant formé par un anneau en fil de fer (32),
**caractérisé en ce que** la surface d'appui (34) de l'anneau support (22) renferme avec l'axe longitudinal (16) de l'articulation élastomère (10) un angle choisi de telle sorte que l'anneau en fil de fer (32), lorsqu'une force axiale (Fₐₓ) agissant sur le tourillon d'articulation (18) survient, subit une force résultante (Fᵣₑₛ) toujours dirigée dans la rainure (38) de manière à empêcher un détachement de l'anneau en fil de fer (32).

2. Articulation élastomère (10) selon la revendication 1, dans laquelle l'anneau en fil de fer (32) présente une section transversale sensiblement circulaire.

3. Articulation élastomère (10) selon la revendication 1, dans laquelle l'anneau en fil de fer (32) présente une section transversale sensiblement ovale, l'axe longitudinal (54) de l'ovale étant dirigé en direction de la face frontale adjacente de l'orifice de passage et renfermant avec l'axe longitudinal (16, 16') de l'articulation élastomère (10) un angle (β) inférieur à 90°.

4. Articulation élastomère (10) selon la revendication 1, dans laquelle l'anneau en fil de fer (32) présente une section transversale polygonale.

5. Articulation élastomère (10) selon la revendication 4, dans laquelle l'anneau en fil de fer (32) présente une section transversale triangulaire, une pointe de la section transversale triangulaire étant dirigée en direction de la face frontale adjacente de l'orifice de passage, et une orthogonale (52) qui traverse cette pointe et qui se rapporte à la base de la section transversale triangulaire opposée à la pointe renfermant avec l'axe longitudinal de l'articulation élastomère (10) un angle (α) inférieur à 90°.

6. Articulation élastomère (10) selon l'une des revendications 1 à 5, dans laquelle la surface d'appui (34) de l'anneau support (22) renferme avec l'axe longitudinal (16) de l'articulation élastomère (10) un angle de sensiblement 45°.

7. Articulation élastomère (10) selon l'une des revendications 1 à 6, dans laquelle l'anneau support supérieur (22) présente de manière adjacente à la surface d'appui (34) un bombement (44) avec un sommet (46), un trajet (s) entre le sommet (46) et un point (48) auquel la rainure (38) se fond dans la surface périphérique intérieure (36) du boîtier (12) étant inférieur au diamètre de l'anneau en fil de fer (32).

8. Articulation élastomère (10) selon l'une des revendications 1 à 7, dans laquelle l'anneau en fil de fer (32) présente un recouvrement de cercle d'au moins 300°.

9. Articulation élastomère (10) selon la revendication 8, dans laquelle l'anneau en fil de fer (32) présente un recouvrement de cercle d'au moins 340°.

10. Articulation élastomère (10) selon l'une des revendications 1 à 9, dans laquelle l'anneau support (22, 24) est réalisé à partir d'une pièce de tôle découpée.

11. Articulation élastomère (10) selon l'une des revendications 1 à 10, dans laquelle l'anneau support (22, 24) est fixé sur le corps élastomère (20).

12. Articulation élastomère (10) selon la revendication 11, dans laquelle l'anneau support (22, 24) est vulcanisé sur le corps élastomère (20).

13. Articulation élastomère (10) selon l'une des revendications 1 à 12, dans laquelle le boîtier (12) présente un perçage (50) accessible depuis l'extérieur qui débouche de manière adjacente à l'anneau en fil de fer (32).

14. Articulation élastomère (10) selon l'une des revendications 1 à 13, dans laquelle il est prévu sur les deux faces frontales de l'orifice de passage un anneau support (22, 24) qui est respectivement arrêté par rapport au boîtier (12) au moyen d'un élément de verrouillage sous forme de l'anneau en fil de fer (32).
